# EUROPÄISCHE PATENTSCHRIFT

(11) **EP 0 613 707 B1**
(45) Veröffentlichungstag und Bekanntmachung des Hinweises auf die Patenterteilung: **01.05.1996**
(21) Anmeldenummer: 94102901.9
(22) Anmeldetag: 25.02.1994
(51) Int. Cl.: B01D 21/00, B01D 21/01, B01D 21/02, B01D 21/24

(54) **Reinigungsanlage, insbesondere zur Aufbereitung farbstoff- und/oder leimhaltigen Waschwassers**
Cleaning installation in particular for treating washing water containing paint and/or glue
Installation de nettoyage notamment pour le traitement d'eau de lavage contenant de la peinture et de la colle

(30) Priorität: 03.03.1993 DE 9303056 U; 14.05.1993 DE 9307375 U
(43) Veröffentlichungstag der Anmeldung: 07.09.1994
(73) Patentinhaber: Kunz, Heinrich, D-77746 Schutterwald (DE)
(72) Erfinder: Kunz, Heinrich, D-77746 Schutterwald (DE)
(74) Vertreter: Schmitt, Hans, Dipl.-Ing.

(56) Entgegenhaltungen:
- DE-A- 4 210 067
- FR-A- 2 044 046
- US-A- 2 461 814

## Beschreibung

Die Erfindung betrifft eine Reinigungsanlage zum Abscheiden und/oder Ausfiltern wasserlöslicher, dispergierter oder anderer Inhaltsstoffe aus einer Flüssigkeit, insbesondere zur Aufbereitung farbstoff- und/oder leimhaltigen Waschwassers, mit einem Reaktionsbehälter, einem Sammelbehälter sowie gegebenenfalls mit einem Filterbehälter oder dergleichen Filtereinheit deren abströmseitige(n) Filter-Austrittsöffnung(en) oberhalb des Sammelbehälters angeordnet sind.

Bei der Verarbeitung beispielsweise von Dispersionsfarben und anderen wasserlöslichen Farben sind die verwendeten Pinsel, Rollen, Pumpenteile oder dergleichen farbverschmutzten Teile nach dem Gebrauch gründlich zu reinigen, um diese Geräte anschließend wiederverwenden zu können. Dabei fällt farbstoffhaltiges Waschwasser an, dessen Entfärbung in den üblichen Klärwerken nicht gewährleistet ist und auch die Reinigungswirkung dieser Klärwerke beeinträchtigen kann. Malerbetriebe benötigen daher eine Reinigungsanlage, die beim Auswaschen von Walzen, Pinseln und anderer farbverschmutzter Teile die Schmutzpartikel abfängt, bevor das derart gereinigte Abwasser in die Kanalisation geleitet werden kann.

Man kennt bereits eine Reinigungsanlage, die zum Reinigen der Maler-Walzen und Pinsel von Dispersions-Farbrückständen und Schwermetallen dient (vgl. Werbeprospekt "WP-Reinigungsanlage" der Fa. Dürr-Metalltechnik, D-72116 Mössingen). Dabei wird das verschmutzte Waschwasser in einem Reaktionsbehälter gesammelt, dem ein Fällungsmittel zugesetzt wird. Nach dem Vermischen des Waschwassers und des Fällungsmittels mit Hilfe eines Rührwerkes wird das farbstoffhaltige Wasser in einen konischen Behälter der Reinigungsanlage abgelassen, der unterhalb des Reaktionsbehälters angeordnet ist. Nach einer weiteren kurzen Reaktionszeit ist der Fällungs- und Sedimentationsprozeß in der vorbekannten Reinigungsanlage abgeschlossen, so daß das geklärte Wasser einem Neutralisierungsbehälter zugeführt werden kann. Das geklärte Wasser kann anschließend in die Kanalisation eingeleitet oder mittels einer Flüssigkeitspumpe in einen Sammeltank gefördert werden, wo es zur erneuten Verwendung als Waschwasser zur Verfügung steht.

Um die farbverschmutzten Teile über dem Reaktionsbehälter stets mit geklärtem Waschwasser reinigen zu können, weist die vorbekannte Vorrichtung eine Zufuhrleitung auf, deren Eintrittsöffnung im konischen Bereich des entsprechenden Behälters vorgesehen ist und in einer Auslaufarmatur der Reinigungsanlage mündet. Dabei wird das Waschwasser über eine Flüssigkeitspumpe gefördert, die in die Zufuhrleitung zwischengeschaltet ist.

Nach dem Fällungs- und Sedimentationsprozeß setzt sich der verbleibende Dispersionsschlamm bei dieser vorbekannten Vorrichtung auch im konischen Bereich der Behälterwände ab und muß von dort in Zeitintervallen wieder gelöst werden. Da auch die Eintrittsöffnung der Zufuhrleitung in dem konischen Bereich des entsprechenden Behälters angeordnet ist, muß zudem bei dieser vorbekannten Reinigungsanlage zusätzlich darauf geachtet werden, daß der sich am Behälterboden absetzende Dispersionsschlamm nicht die Eintrittsöffnung der Zufuhrleitung verstopft.

Aus der DE 42 10 067 A1 ist bereits eine Reinigungsanlage der eingangs erwähnten Art bekannt, die einen Schmutzwasser- oder Reaktionsbehälter hat, welcher in seinem oberen Behälterbereich zum Zugeben eines Koaguliermittels eine Öffnung und in seinem unteren Bereich mindestens einen Ablaßhahn aufweist, über den das mit Lack-, Beiz- oder Klebstoffen verschmutzte Brauchwasser in einem Filterbehälter mit Filtereinlage ablaßbar ist. Unter dem Filterbehälter ist ein Sammelbehälter angeordnet, an den eine Förderleitung mit einer zwischengeschalteten Pumpe angeschlossen ist. Die Förderleitung mündet im Bereich eines Waschbeckens, das zum Reinigen von verschmutzten Arbeitsgeräten oberhalb des Reaktionsbehälters angeordnet ist.

Bei der vorbekannten Reinigungsanlage ist der Boden des Reaktionsbehälters schräg ausgerichtet, damit der am Boden abgelagerte Restschlamm zu einem an der tiefsten Stelle des Bodens an der vorderen Behälterwand befindlichen Ablaßhahn gelangen kann. Auch bei dieser vorbekannten Reinigungsanlage setzt sich jedoch der nach dem Fällungs- und Sedimentationsprozeß verbleibende Dispersionsschlamm an der schrägen Behälterwand ab, ohne daß der Schlamm durch den Ablaßhahn vollständig abfließen kann. Die somit in gewissen Zeitabständen erforderliche Reinigung des Behälterbodens in dem vergleichsweise hohen Reaktionsbehälter kann sich jedoch aufwendig und schwierig gestalten.

Es besteht daher die Aufgabe, eine Reinigungsanlage der eingangs erwähnten Art zu schaffen, die in ihrer Handhabung möglichst einfach und praktisch wartungsfrei ist und sich durch eine kompakte Ausgestaltung auszeichnet. Dabei soll die erfindungsgemäße Reinigungsanlage eine möglichst wirkungsvolle Reinigung farbverschmutzter Teile sowie des bei der Säuberung dieser Teile anfallenden Waschwassers erlauben.

Die erfindungsgemäße Lösung dieser Aufgabe besteht bei der Reinigungsanlage der eingangs erwähnten Art darin, daß der Reaktionsbehälter zum Ausgießen der in ihm enthaltenen Flüssigkeit um eine mit Abstand oberhalb des Sammelbehälters angeordnete, etwa horizontale Schwenkachse kippbar oder verschwenkbar ist, daß der Filterbehälter oder dergleichen auf der dem Reaktionsbehälter abgewandten Seite der Schwenkachse vorgesehen ist, und daß die Einschütt- oder Eintrittsöffnung des Filterbehälters unterhalb zumindest einer Ausgußöffnung des Reaktionsbehälters angeordnet ist.

Bei der erfindungsgemäßen Reinigungsanlage kann nach dem Fällungs- und Sedimentationsprozeß das geklärte Wasser zunächst in den Sammelbehälter eingeleitet werden. Anschließend wird der abgesetzte Dispersionsschlamm durch Kippen des Reaktionsbehälters in den Filterbehälter umgefüllt. Dabei kann der Reaktionsbehälter nach dem Abfließen des Wassers vergleichsweise leicht um seine Schwenkachse verschwenkt werden. Im Filterbehälter wird der Dispersionsschlamm von dem darin noch verbliebenen Waschwasser getrennt, bevor das Waschwasser ebenfalls in den Sammelbehälter eingeleitet wird. Der im Filterbehälter zurückbleibende Dispersionsschlamm hat nur noch einen vergleichsweise geringen Feuchtigkeitsgehalt und kann spätestens nach dem Trocknen beispielsweise als Spachtelmasse oder dergleichen aufbereitet und wiederverwertet werden.

Da der Reaktionsbehälter zum Ausgießen des Dispersionsschlammes praktisch um 180° verschwenkt und auf den Kopf gestellt werden kann, ist ein konischer Behälterbereich bei der erfindungsgemäßen Reinigungsanlage an sich nicht erforderlich. Dies begünstigt die kompakte Ausgestaltung sowie die einfache Handhabung der erfindungsgemäßen Reinigungsvorrichtung.

Eine besonders vorteilhafte Ausführungsform gemäß der Erfindung sieht vor, daß der Reaktionsbehälter mit dem Sammelbehälter über eine Flüssigkeitsleitung verbunden ist, die zumindest in ihrem zuströmseitigen Leitungsabschnitt im Behälterinnenraum des Reaktionsbehälters positionierbar ist und abströmseitig im Sammelbehälter mündet. Bei dieser Ausführungsform der erfindungsgemäßen Reinigungsanlage kann der zuströmseitige Leitungsabschnitt der Flüssigkeitsleitung, welche den Reaktionsbehälter mit dem Sammelbehälter verbindet, so im Reaktionsbehälter positioniert werden, daß die Eintrittsöffnung oder die Eintrittsöffnungen dieser Flüssigkeitsleitung unmittelbar oberhalb der Trennebene liegen, welche nach dem Fällungs- und Sedimentationsprozeß den Dispersionsschlamm von dem darüberliegenden, geklärten Wasser trennt. Dabei ist der Reaktionsbehälter oberhalb des Filterbehälters und der Filterbehälter seinerseits oberhalb des Sammelbehälters angeordnet, wobei der Reaktionsbehälter über die Flüssigkeitsleitung mit dem Sammelbehälter verbunden ist. Bei einer solchen Ausführungsform wird das nach dem Fällungs- und Sedimentationsprozeß abgeklärte Wasser über die Flüssigkeitsleitung in den Sammelbehälter eingeleitet. Der im Reaktionsbehälter zunächst verbleibende Dispersionsschlamm wird anschließend zusätzlich noch über den Filterbehälter geführt, um das darin verbliebene Waschwasser auszufiltern, bevor es ebenfalls in den Sammelbehälter eingeleitet wird.

Die erfindungsgemäße Reinigungsanlage ist zum Abscheiden und Ausfiltern farbstoffhaltigen Waschwassers vorgesehen, kann aber auch zum Reinigen leimhaltigen Waschwassers oder solcher Flüssigkeiten eingesetzt werden, die nach einem Reaktions- oder Sedimentationsprozeß in mehrere, durch Trennebenen voneinander abgesetzte Schichten unterteilt sind.

Eine besonders einfache und vorteilhafte Ausführungsform gemäß der Erfindung sieht vor, daß die Flüssigkeitsleitung zumindest in ihrem zuströmseitigen Leitungsabschnitt als Rohrleitung ausgebildet ist, die zum Positionieren ihrer Eintrittsöffnung(en) wenigstens ein Rohrsegment aufweist, welches etwa in vertikaler und vorzugsweise auch in horizontaler Richtung verschwenkbar gehalten ist. Eine solche, insbesondere in vertikaler Richtung verschwenkbare Rohrleitung kann auf einfache Weise oberhalb der zwischen zwei Medien gebildeten Trennschicht positioniert und gehalten werden.

Um ein vorzeitiges Abfließen des Waschwassers während des Reaktions- und Sedimentationsprozesses aus dem Reaktionsbehälter zu vermeiden, ist es zweckmäßig, wenn die Rohrleitung in eine Schwenkposition verschwenkbar ist, in der die Eintrittsöffnung(en) oberhalb des im Reaktionsbehälters vorgesehenen Flüssigkeitsspiegels angeordnet ist(sind).

Um den Dispersionsschlamm weitestgehend vom Waschwasser trennen zu können, ist es zweckmäßig, wenn die Filtereinheit als Filterkorb ausgebildet ist, welcher zumindest an seinem zum Sammelbehälter weisenden Korbboden flüssigkeitsdurchlässig ist und in dem vorzugsweise eine Filtertüte oder dergleichen austauschbarer Filtereinsatz einlegbar ist.

Zum Reinigen farbverschmutzter Pinsel, Rollen oder dergleichen Geräte ist es zweckmäßig, wenn die Reinigungsanlage im Bereich des Reaktionsbehälters eine Spülflüssigkeitsleitung hat, die an ihrem abströmseitigen, vorzugsweise handhabbaren und/oder flexiblen Endbereich einen Brause- oder dergleichen Reinigungskopf aufweist.

Um das Waschwasser in einem praktisch geschlossenen Flüssigkeitskreislauf immer wieder erneut zum Reinigen der farbverschmutzten Teile verwenden zu können, sieht eine bevorzugte Ausführungsform gemäß der Erfindung vor, daß der zuströmseitige Leitungsbereich der Spülflüssigkeitsleitung zum Ansaugen der im Sammelbehälter enthaltenen Flüssigkeit im Sammelbehälter angeordnet ist und daß in die Spülflüssigkeitsleitung vorzugsweise eine Flüssigkeitspumpe zwischengeschaltet ist, welche insbesondere über einen Fußschalter bedienbar ist. Insbesondere wenn die Flüssigkeitspumpe über einen Fußschalter bedienbar ist, hat das Bedienpersonal zum Reinigen der farbverschmutzten Teile insoweit beide Hände frei.

Zum Abstreifen der Farbreste vom Pinsel oder dergleichen ist es zweckmäßig, wenn der Reaktionsbehälter vorzugsweise oberhalb seines Flüssigkeitsspiegels einen Siebboden, Gitterboden oder dergleichen Reinigungsablage aufweist.

Bei der erfindungsgemäßen Vorrichtung kann der Reaktionsbehälter, der Sammelbehälter und/oder der Filterbehälter im wesentlichen aus Kunststoff, vorzugsweise aus Polypropylen oder aus Metall, insbesondere aus Edelstahl, hergestellt sein. Dabei hat Polypropylen-Material den Vorteil, daß es sich hierbei um ein weitgehend inertes und chemikalienbeständiges Material handelt, an dem auch die im Waschwasser enthaltenen Farben oder Leime nicht ohne weiteres haften bleiben. Demgegenüber zeichnet sich insbesondere Edelstahl-Material durch seine größere mechanische Belastbarkeit sowie seine Kältebeständigkeit aus.

Wird das Waschwasser in der erfindungsgemäßen Reinigungsanlage in einem praktisch geschlossenen Wasserkreislauf geführt und zur Reinigung der farbverschmutzten Teile immer wieder erneut aus dem Sammelbehälter entnommen, so ist es vorteilhaft, wenn dem Sammelbehälter eine Frischwasser-Zufuhrleitung zugeordnet ist, in die ein in Abhängigkeit vom Flüssigkeitsspiegel des Sammelbehälters betätigbares Sperr- oder Regelorgan zwischengeschaltet ist. Bei einer solchen Ausführungsform steht zum Reinigen der farbverschmutzten Teile auch bei einem geringfügigen Flüssigkeitsverlust stets ausreichend Waschwasser im Sammelbehälter zur Verfügung.

Um nach dem Einleiten von Fällungs-, Flockungs- und dergleichen Reaktionstrennungsmitteln den dadurch ausgelösten Reaktions- und Sedimentationsprozeß im Reaktionsbehälter beschleunigen zu können, ist es vorteilhaft, wenn dem Reaktionsbehälter eine Rühreinrichtung zugeordnet ist, welche vorzugsweise über eine Zeitschalteinheit steuerbar ist.

Weitere Merkmale der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig.1: eine Reinigungsanlage zum Reinigen farbverschmutzter Abwässer in einer Seitenansicht, wobei die Reinigungsanlage einen Sammelbehälter für das gereinigte Wasser, einen Filterbehälter sowie einen Reaktionsbehälter hat, welcher über eine in seinem Behälterinneren verschwenkbare Flüssigkeits- oder Rohrleitung mit dem Sammelbehälter verbunden ist,
- Fig.2: die Reinigungsanlage aus Fig.1, wobei sich die im Reaktionsbehälter vorgesehene Flüssigkeits- oder Rohrleitung in einer anderen Schwenkposition befindet,
- Fig.3: die Reinigungsanlage aus Fig.1 und 2, in einer gekippten Position ihres Reaktionsbehälters,
- Fig. 4: den Reaktionsbehälter einer Reinigungsanlage in einer seitlichen Schnittdarstellung, wobei die ansonsten gemäß den Figuren 1 bis 3 ausgebildete Reinigungsanlage nicht weiter dargestellt ist, und
- Fig. 5: den Reaktionsbehälter aus Figur 4 in einer frontseitigen Schnittdarstellung.

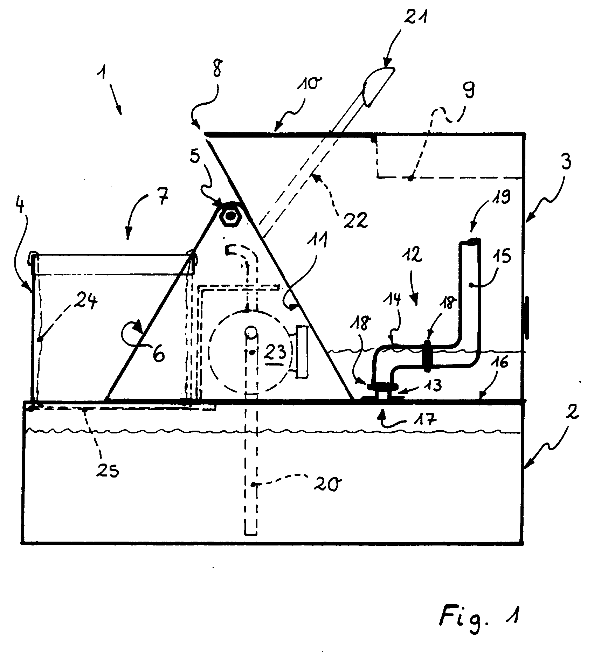

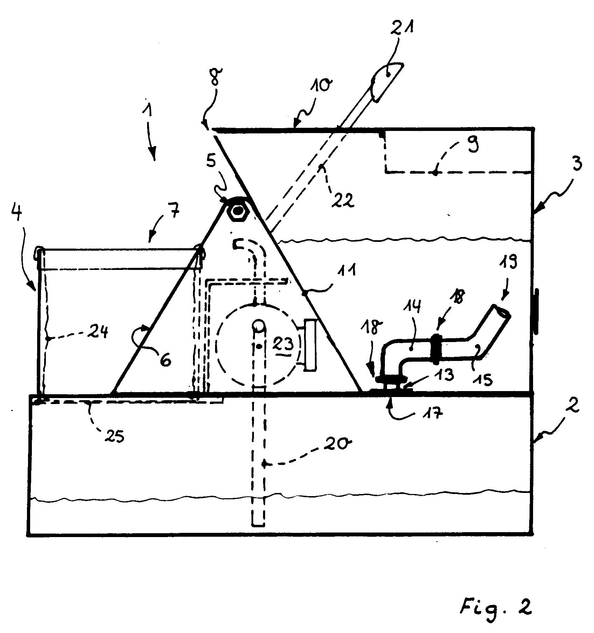

In den Figuren 1 bis 3 ist eine Reinigungsanlage 1 zum Abscheiden und Ausfiltern dispergierter Inhaltsstoffe aus einem farbstoffhaltigen Waschwasser dargestellt. Mit Hilfe der Reinigungsanlage 1 können Rollen, Pinsel, Pumpenteile oder andere Gerätschaften gereinigt werden, die bei der Verarbeitung von Dispersionsfarben, Beizen, Lacken, Leimen oder anderer wasserlöslicher Flüssigkeiten verschmutzt wurden.

Die Reinigungsanlage 1 weist einen Sammelbehälter 2 zur Aufnahme des aufbereiteten Waschwassers auf, der an seiner Oberseite offen ausgebildet ist. Die Reinigungsanlage 1 hat auch einen Reaktionsbehälter 3 sowie einen Filterbehälter 4, die nebeneinander oberhalb des Sammelbehälters 2 angeordnet sind.

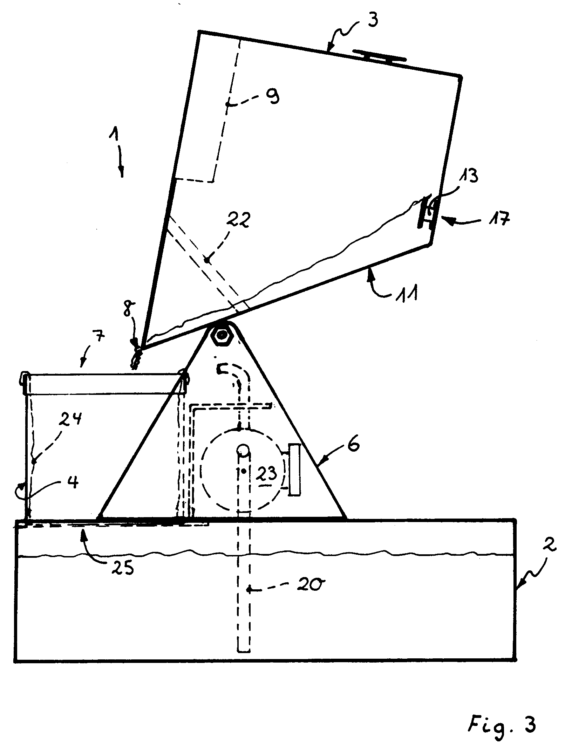

Wie Fig.3 zeigt, ist der Reaktionsbehälter 3 um eine mit Abstand oberhalb des Sammelbehälters 2 angeordnete horizontale Schwenkachse 5 verschwenkbar, welche beidseits über zwei dreieckförmige Halteplatten 6 am Sammelbehälter 2 gehalten ist. Der Filterbehälter 4 ist so auf der dem Reaktionsbehälter 3 abgewandten Seite der Schwenkachse 5 angeordnet, daß die Einschüttöffnung 7 des Filterbehälters 4 zumindest in der in Fig.3 gezeigten Kippstellung des Reaktionsbehälters 3 unterhalb dessen Ausgußöffnung 8 angeordnet ist.

Der Reaktionsbehälter 3 ist auf seiner Oberseite bereichsweise offen ausgebildet. Auf der der Schwenkachse 5 abgewandten Außenseite des Reaktionsbehälters 3 hat dieser einen Gitterboden oder dergleichen Reinigungsablage 9, auf der die zu reinigenden Teile abgelegt und gegebenenfalls auch abgestreift werden können. Demgegenüber ist der der Schwenkachse 5 zugewandte Bereich auf der Oberseite des Reaktionsbehälters durch eine Deckplatte 10 abgedeckt, die mit dem Reaktionsbehälter fest verbunden ist. Die an die Schwenkachse 5 angrenzende Behälterwand 11 ist zur Schwenkachse 5 hin schräg nach außen geneigt und schließt zwischen sich und der Deckplatte 10 einen spitzen Winkel ein. An dem zwischen Deckplatte 10 und Behälterwand 11 vorgesehenen Randbereich ist die Ausgußöffnung 8 des Reaktionsbehälters 3 vorgesehen, die - wie hier - beispielsweise schlitzförmig ausgebildet sein kann. Die schräge Anordnung der Behälterwand 11 und die Deckplatte 10 erleichtern ein Umschütten des Behälterinhalts vom Reaktionsbehälter 3 in den Filterbehälter 4.

Der Reaktionsbehälter 3 weist in seinem Behälterinneren eine Flüssigkeitsleitung 12 auf, die den Reaktionsbehälter 3 mit dem Sammelbehälter 2 verbindet. Diese Flüssigkeitsleitung 12 ist hier als Rohrleitung ausgebildet, welche drei Rohrsegmente 13,14,15 aufweist. Dabei ist ein erste Rohrsegment oder ein erster Rohrabschnitt 13 fest am Behälterboden 16 des Reaktionsbehälters 3 montiert und bildet die abströmseitige Austrittsöffnung 17 dieser im Sammelbehälter 2 mündenden Flüssigkeitsleitung 12. Mit dem ersten Rohrsegment 13 ist ein zweites Rohrsegment 14 über ein Verbindungsstück 18 gelenkig verbunden, welches ein Verdrehen des zweiten Rohrsegmentes 14 gegenüber dem ersten Rohrsegment 13 in einer etwa horizontalen Drehebene erlaubt. Das zweite Rohrsegment 14 ist etwa rechtwinklig abgebogen und seinerseits mit einem dritten Rohrsegment 15 verbunden, welches an seinem freien Ende die zuströmseitige Eintrittsöffnung 19 der Flüssigkeitsleitung 12 bildet.

Auch zwischen dem zweiten und dem ebenfalls etwa im rechten Winkel abgewinkelten dritten Rohrsegment 15 ist ein Verbindungsstück 18 vorgesehen, so daß das dritte Rohrsegment 15 gegenüber dem zweiten Rohrsegment 14 praktisch in einer vertikalen Ebene verdrehbar ist. Diese Ausgestaltung der Rohrleitung 12 erlaubt es, die zuströmseitige Eintrittsöffnung 19 der Flüssigkeitsleitung 12 im Behälterinnenraum des Reaktionsbehälters 3 so zu positionieren, daß nur die oberen und bis zur Eintrittsöffnung 19 reichenden Flüssigkeitsschichten in den Sammelbehälter 2 abfließen. Wie Fig.1 zeigt, ist die Rohrleitung 12 dabei auch in eine Schwenkposition verschwenkbar, in der die Eintrittsöffnung 19 oberhalb des im Reaktionsbehälters 3 vorgesehenen Flüssigkeitsspiegels angeordnet ist, sodaß ein weiteres Ausfließen des Behälterinhalts verhindert wird. Ein besonderes Ventil, das bei farbverschmutzten Abwässern ohnehin leicht verstopfen könnte, ist daher nicht erforderlich.

Zum Reinigen von Rollen, Pinseln und anderer Gerätschaften im Bereich des Reaktionsbehälters 3 und seiner Reinigungsablage 9 ist eine Spülflüssigkeitsleitung vorgesehen, deren zuströmseitiger Leitungsbereich 20 zum Ansaugen des gereinigten Waschwassers im Sammelbehälter 2 angeordnet ist. Der abströmseitige, handhabbare und hier nur bereichsweise dargestellte Leitungsbereich der Spülflüssigkeitsleitung ist flexibel ausgestaltet und weist einen Brausekopf 21 auf, welcher in einer Aufnahmeöffnung der Deckplatte 10 verrastbar oder dergleichen arretierbar ist. Im Behälterinneren des Reaktionsbehälters 3 kann der flexible Schlauch der Spülflüssigkeitsleitung ein Rohr 22 durchsetzen, das in der Deckplatte 10 und in der Behälterwand 11 fest und dicht gehalten ist. In die Spülflüssigkeitsieitung ist eine Flüssigkeitspumpe 23 zwischengeschaltet, die als Druckerhöhungspumpe ausgebildet und zwischen den beiden Halteplatten 6 oberhalb des Sammelbehälters 2 angeordnet ist. Diese Flüssigkeitspumpe 23 ist über einen - hier nicht sichtbaren - Fußschalter bedienbar, so daß dem Bedienpersonal zum Reinigen der Pinsel oder dergleichen beide Hände zur Verfügung stehen.

Pinsel und andere farb- oder leimverschmutzten Teile können vom Bedienpersonal im Bereich des Reaktionsbehälters 3 der Reinigungsanlage 1 gereinigt werden. Zum Reinigen steht dem Bedienpersonal der Brausekopf 21 zur Verfügung, dem das benötigte Waschwasser über die Spülflüssigkeitsleitung mittels der Flüssigkeitspumpe 23 aus dem Sammelbehälter 2 zugeführt wird. Dabei lassen sich größere Schmutzreste auch an der Reinigungsablage 9 abstreifen. Das anschließend farbstoff- oder leimhaltige Waschwasser wird im Reaktionsbehälter 3 aufgefangen. Nach dem Reinigen der farbverschmutzten Teile wird diesem Waschwasser im Reaktionsbehälter 3 ein Fällungs-, Flockungs- oder auch andere, gegebenenfalls kombinierte Reaktionstrennungsmittel zugesetzt.

Mittels einer hier nicht dargestellten Rühreinrichtung kann die Reaktionszeit im Reaktionsbehälter 3 beschleunigt und das aufzubereitende Wasser gut vermischt werden. Dabei ist es zweckmäßig, wenn diese Rühreinrichtung vorzugsweise über eine Zeitschalteinheit steuerbar ist.

Bereits kurze Zeit nach dem Durchmischen des Behälterinhalts ist der Fällungs- und Sedimentationsprozeß im Reaktionsbehälter 3 abgeschlossen. Dabei hat sich das Waschwasser als obere, abgeklärte Schicht abgesetzt, während die Farbstoffe und dergleichen als Dispersionsschlamm auf den Behälterboden 16 absinken.

Um die obere, geklärte Waschwasser-Schicht in den Sammelbehälter 2 ablassen zu können, wird der zuströmseitige Leitungsabschnitt der Flüssigkeitsleitung 12 so verschwenkt, daß deren Eintrittsöffnung 19 geringfügig oberhalb der Trennebene zwischen dem Waschwasser und dem Dispersionsschlamm angeordnet ist. Durch bloßes Kippen des Reaktionsbehälters 3 kann anschließend der in ihm zunächst zurückgebliebende Dispersionsschlamm in den Filterbehälter 4 umgefüllt werden. Der Filterbehälter 4 ist als Filterkorb ausgebildet, welcher zumindest an seinem zum Sammelbehälter 2 weisenden Korbboden flüssigkeitsdurchlässig ist. In den Filterbehälter 4 ist eine austauschbare Filtertüte 24 einlegbar. Der Filterbehälter 4 läßt den im Dispersionsschlamm enthaltenen Waschwasser-Rest in den Sammelbehälter 2 abfließen. Sodann kann aus der Filtertüte 24 der Dispersionsschlamm entnommen und als Spachtelmasse wieder verwendet werden.

Das in einem nahezu geschlossenen Wasserkreislauf immer wieder geklärte Waschwasser steht im Sammelbehälter für weitere Waschvorgänge zur Verfügung. Damit über die Flüssigkeitspumpe 23 stets ausreichend reines oder gereinigtes Waschwasser angesaugt werden kann, ist eine - hier nicht sichtbare - Frischwasser-Zufuhrleitung vorgesehen, in die ein in Abhängigkeit vom Flüssigkeitsspiegel des Sammelbehälters 2 betätigbares Sperr- oder Regelorgan zwischengeschaltet ist.

Zweckmäßig ist es, wenn der Reaktionsbehälter 3, der Sammelbehälter 2 und der Filterbehälter 4 im wesentlichen aus Polypropylen oder dergleichen Kunststoff bestehen, welcher chemikalienbeständig ist und an dem Farbreste oder dergleichen nicht anhaften können. Die Behälter 2,3 und 4 der Reinigungsanlage 1 können aber auch aus Metall, insbesondere aus Edelstahl, hergestellt sein.

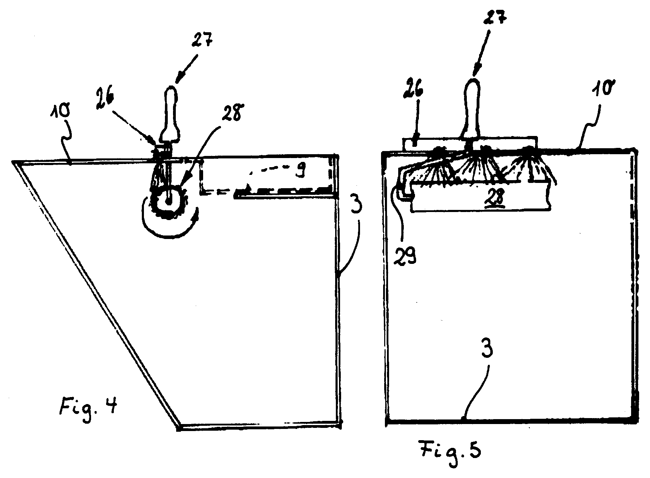

In den Figuren 4 und 5 ist eine Ausführungsform dargestellt, bei der die hier schachtel- oder tablettförmige Reinigungsablage 9 zumindest teilweise aus dem Reaktionsbehälter 3 herausnehmbar ist. In dem an die Reinigungsablage 9 angrenzenden Bereich der Deckplatte 10 ist zumindest eine Spritzdüse, vorzugsweise mehrere Spritzdüsen 26 vorgesehen, welche so angeordnet sind, daß ihr Wasserstrahl jeweils in den Innenraum des Behälters 3 und etwa tangential zum Walzenkörper 28 einer Farbwalze 27 angeordnet ist. Diese tangentialen Wasserstrahlen, die den Walzenkörper 28 in eine rotierende Bewegung versetzen, können eine Farbwalze 27 besonders gut reinigen.

Um die Farbwalze 27 möglichst einfach unter den Spritzdüsen 26 positionieren zu können, ist diese mit ihrem Walzenarm 29 in einen randseitig offenen Längsschlitz der Deckplatte 10 geführt, der etwa parallel zu den Längsseiten des Reaktionsbehälters 3 verläuft, vorzugsweise bis in den Bereich der Spritzdüsen 26 reicht und durch zumindest teilweises Herausnehmen der Reinigungsablage 9 zum Einschieben der Farbwalze 27 freigelegt werden kann.

Auch die Spritzdüsen 26 sind über die Spülflüssigkeitsleitung mit der Flüssigkeitspumpe 23 verbunden. In die Spülflüssigkeitsleitung ist dazu ein - hier nicht dargestelltes - T-Stück zwischengeschaltet, das an seinem einen Anschlußende zum Brausekopf 21 führt und an seinem anderen Anschlußende mit den Spritzdüsen 26 verbunden ist. Durch zumindest ein entsprechendes Mehrwegeventil, Sperrventil oder dergleichen Sperr- oder Regelorgan kann der durch die Spülflüssigkeitsleitung geführte Flüssigkeitsstrom vom Sammelbehälter 2 zum Brausekopf 21 und/oder zu den Spritzdüsen 26 geführt werden.

Bei der hier dargestellten Ausführungsform werden die Spritzdüsen 26 durch die Austrittsöffnungen 26 eines gemeinsamen Düsenrohres gebildet, welches mit der Spülflüssigkeitsleitung verbunden ist.

Die hier dargestellte Reinigungsanlage 1, die eine Höhe von 700 bis 1800 mm, vorzugsweise 1200 mm hat, zeichnet sich durch ihre kompakte Bauweise aus. Durch bloßes Kippen des Reaktionsbehälters 3 kann der in ihm enthaltene Dispersionsschlamm praktisch vollständig entleert und in den Filterbehälter 4 geschüttet werden. Das zum Reinigen der Pinsel oder dergleichen Gerätschaften verwendete Waschwasser steht nach einem kurzen Fällungs- und Sedimentationsprozeß im Sammelbehälter 2 für nachfolgende Waschvorgänge wieder zur Verfügung.

## Patentansprüche

1. Reinigungsanlage (1) zum Abscheiden und/oder Ausfiltern wasserlöslicher, dispergierter oder anderer Inhaltsstoffe aus einer Flüssigkeit, insbesondere zur Aufbereitung farbstoff- und/oder leimhaltigen Waschwassers, mit einem Reaktionsbehälter (3), einem Sammelbehälter (2) sowie einem Filterbehälter (4) oder dergleichen Filtereinheit, deren abströmseitige(n) Filter-Austrittsöffnung(en) (25) oberhalb des Sammelbehälters (2) angeordnet ist (sind), **dadurch gekennzeichnet**, daß der Reaktionsbehälter (3) zum Ausgießen der in ihm enthaltenen Flüssigkeit um eine mit Abstand oberhalb des Sammelbehälters (2) angeordnete, etwa horizontale Schwenkachse (5) kippbar oder verschwenkbar ist, daß der Filterbehälter (4) oder dergleichen auf der dem Reaktionsbehälter (3) abgewandten Seite der Schwenkachse (5) vorgesehen ist, und daß die Einschütt- oder Eintrittsöffnung des Filterbehälters (4) unterhalb zumindest einer Ausgußöffnung (8) des Reaktionsbehälters (3) angeordnet ist.

2. Reinigungsanlage nach Anspruch 1, dadurch gekennzeichnet, daß der Reaktionsbehälter (3) mit dem Sammelbehälter (2) über eine Flüssigkeitsleitung (12) verbunden ist, die zumindest in ihrem zuströmseitigen Leitungsabschnitt im Behälterinnenraum des Reaktionsbehälters (3) positionierbar ist und abströmseitig im Sammelbehälter (2) mündet.

3. Reinigungsanlage nach Anspruch 1 oder 2, dadurch gekennzeichnet, daß die Flüssigkeitsleitung (12) zumindest in ihrem zuströmseitigen Leitungsabschnitt als Rohrleitung ausgebildet ist, die zum Positionieren ihrer Eintrittsöffnung(en) (19) wenigstens ein Rohrsegment (13, 14, 15) aufweist, welches etwa in vertikaler und vorzugsweise auch in horizontaler Richtung verschwenkbar gehalten ist.

4. Reinigungsanlage nach einem der Ansprüche 1 bis 3, dadurch gekennzeichnet, daß die Rohrleitung in eine Schwenkposition verschwenkbar ist, in der die Eintrittsöffnung(en) oberhalb des im Reaktionsbehälters vorgesehenen Flüssigkeitsspiegels angeordnet ist(sind).

5. Reinigungsanlage nach einem der Ansprüche 1 bis 4, dadurch gekennzeichnet, daß der Reaktionsbehälter (3) und gegebenenfalls auch der Filterbehälter (4) oder dergleichen oberhalb des Sammelbehälters (2) angeordnet sind und daß die Austrittsöffnung(en) (17) der Flüssigkeitsleitung (12) im Reaktionsbehälter (3) vorzugsweise etwa in Höhe seines Behälterbodens (16) angeordnet sind.

6. Reinigungsanlage nach einem der Ansprüche 1 bis 5, dadurch gekennzeichnet, daß die Filtereinheit als Filterkorb ausgebildet ist, welcher zumindest an seinem zum Sammelbehälter (2) weisenden Korbboden flüssigkeitsdurchlässig ist und in den vorzugsweise eine Filtertüte oder dergleichen austauschbarer Filtereinsatz einlegbar ist.

7. Reinigungsanlage nach einem der Ansprüche 1 bis 6, dadurch gekennzeichnet, daß die Reinigungsanlage (1) eine Spülflüssigkeitsleitung zum Reinigen von Pinseln, Rollen, Geräteteilen oder anderen Teilen im Bereich des Reaktionsbehälters (3) hat, die an ihrem abströmseitigen, vorzugsweise handhabbaren und/oder flexiblen Endbereich einen Brause- oder dergleichen Reinigungskopf (21) aufweist.

8. Reinigungsanlage nach einem der Ansprüche 1 bis 7, dadurch gekennzeichnet, daß der zuströmseitige Leitungsbereich (20) der Spülflüssigkeitsleitung zum Ansaugen der im Sammelbehälter (2) enthaltenen Flüssigkeit im Sammelbehälter (2) angeordnet ist und daß in die Spülflüssigkeitsleitung vorzugsweise eine Flüssigkeitspumpe (23) zwischengeschaltet ist, welche insbesondere über einen Fußschalter bedienbar ist.

9. Reinigungsanlage nach einem der Ansprüche 1 bis 8, dadurch gekennzeichnet, daß die Flüssigkeitspumpe (23) als Tauchpumpe oder Druckerhöhungspumpe ausgebildet ist.

10. Reinigungsanlage nach einem der Ansprüche 1 bis 9, dadurch gekennzeichnet, daß der Reaktionsbehälter (3) vorzugsweise oberhalb seines Flüssigkeitsspiegels einen Siebboden, Gitterboden oder dergleichen Reinigungsablage (9) aufweist.

11. Reinigungsanlage nach einem der Ansprüche 1 bis 10, dadurch gekennzeichnet, daß der Reaktionsbehälter (3), der Sammelbehälter (2) und/oder der Filterbehälter (4) oder dergleichen im wesentlichen aus Kunststoff, vorzugsweise aus Polypropylen, oder aus Metall, insbesondere aus Edelstahl, hergestellt ist.

12. Reinigungsanlage nach einem der Ansprüche 1 bis 11, dadurch gekennzeichnet, daß dem Sammelbehälter (2) eine Frischwasser-Zufuhrleitung zugeordnet ist, in die ein in Abhängigkeit vom Flüssigkeitsspiegel des Sammelbehälters (2) betätigbares Sperr- oder Regelorgan zwischengeschaltet ist.

13. Reinigungsanlage nach einem der Ansprüche 1 bis 12, dadurch gekennzeichnet, daß dem Reaktionsbehälter eine insbesondere elektrische oder pneumatische Rühreinrichtung zugeordnet ist, welche vorzugsweise über eine Zeitschalteinheit steuerbar ist.

## Claims

1. A cleaning installation (1) for separating and/or filtering out water-soluble, dispersed or other constituents from a fluid, in particular for treating washing water containing paint and/or glue, including a reaction vessel (3), a collecting vessel (2) as well as a filter vessel (4) or similar filter unit, the discharge opening(s) (25) of said filter unit being arranged above the collecting vessel (2), **characterized in that** in order to pour out the fluid contained in the reaction vessel (3) said reaction vessel is adapted to be tipped or swung about an approximately horizontal pivot (5) arranged spaced above the collecting vessel (2), that the filter vessel (4) or the like is provided on that side of the pivot (5) which is averted from the reaction vessel (3), and that the feed opening or inlet of the filter vessel (4) is arranged beneath at least one outlet (8) of the reaction vessel (3).

2. A cleaning installation as claimed in claim 1, characterized in that the reaction vessel (3) is connected to the collecting vessel (2) by way of a fluid duct (12) of which at least the inflow portion is adapted to be positioned inside the reaction vessel (3) and of which the outflow portion ends in the collecting vessel (2).

3. A cleaning installation as claimed in claim 1 or claim 2, characterized in that at least the inflow portion of the fluid duct (12) takes the form of a pipe having at least one segment (13, 14, 15) held so as to be capable of swivelling approximately vertically and preferably also horizontally for positioning the pipe inlet(s) (19).

4. A cleaning installation as claimed in any one of claims 1 to 3, characterized in that the pipe is adapted to be swivelled into a position in which the inlet(s) is (are) arranged above the liquid level in the reaction vessel.

5. A cleaning installation as claimed in any one of claims 1 to 4, characterized in that the reaction vessel (3) and possibly also the filter vessel (4) or the like are arranged above the collecting vessel (2) and that the outlet(s) (17) of the fluid duct (12) in the reaction vessel (3) are preferably arranged at approximately the level of the bottom (16) thereof.

6. A cleaning installation as claimed in any one of claims 1 to 5, characterized in that the filter unit takes the form of a filter basket permeable to fluid at least at its bottom facing the collecting vessel (2) and adapted to receive preferably a filter bag or similar replaceable filter element.

7. A cleaning installation as claimed in any one of claims 1 to 6, characterized in that the cleaning installation (1) has a flush pipe for cleaning paintbrushes, rollers, utensils or other items in the region of the reaction vessel (3), said pipe having in the region of its preferably manipulable and/or flexible outflow end a shower head or similar cleaning head (21).

8. A cleaning installation as claimed in any one of claims 1 to 7, characterized in that the inflow region (20) of the flush pipe is arranged in the collecting vessel (2) to draw off the fluid contained therein and that preferably a liquid pump (23) is interconnected in the flush pipe and in particular is operable by way of a foot actuated switch.

9. A cleaning installation as claimed in any one of claims 1 to 8, characterized in that the liquid pump (23) takes the form of a submersible pump or booster pump.

10. A cleaning installation as claimed in any one of claims 1 to 9, characterized in that the reaction vessel (3) preferably has above its liquid level a perforated plate, grid tray or similar cleaning receptacle (9).

11. A cleaning installation as claimed in any one of claims 1 to 10, characterized in that the reaction vessel (3), the collecting vessel (2) and/or the filter vessel (4) or the like are made essentially of plastic, preferably of polypropylene, or of metal, particularly of special steel.

12. A cleaning installation as claimed in any one of claims 1 to 11, characterized in that associated with the collecting vessel (2) there is a make-up water supply line with an inserted check or control element operable in dependence on the liquid level of the collecting vessel (2).

13. A cleaning installation as claimed in any one of claims 1 to 12, characterized in that a stirring mechanism, in particular an electric or pneumatic one, is associated with the reaction vessel and is preferably controllable by way of a timing unit.

## Revendications

1. Installation de nettoyage (1) pour séparer ou extraire par filtration d'un liquide des substances solubles dans l'eau, en dispersion ou autres, notamment pour le traitement d'eau de lavage contenant de la peinture et/ou de la colle, avec un récipient de réaction (3), un récipient collecteur (2) ainsi qu'un récipient de filtration (4) ou unité de filtration similaire, dont la ou les ouvertures de sortie de filtration (25), côté flux sortant, sont disposées au-dessus du récipient collecteur (2), **caractérisée** en ce que le récipient de réaction (3) peut, afin de déverser le liquide qu'il contient, être basculé ou pivoté autour d'un axe de pivotement (5) approximativement horizontal, disposé à distance au-dessus du récipient collecteur (2), en ce que le récipient de filtration (4) ou similaire est prévu sur le côté de l'axe de pivotement (5) qui est opposé au récipient de réaction (3), et en ce que l'ouverture d'entrée ou d'alimentation par versement du récipient de filtration (4) est disposée en dessous d'au moins une ouverture de déversement (8) du récipient de réaction (3).

2. Installation de nettoyage selon la revendication 1, **caractérisée** en ce que le récipient de réaction (3) est relié au récipient collecteur (2) par l'intermédiaire d'une conduite de liquide (12), qui peut être positionnée, au moins par sa partie de conduite côté flux entrant, dans l'espace intérieur du récipient de réaction (3), et qui débouche côté flux sortant dans le récipient collecteur (2).

3. Installation de nettoyage selon la revendication 1 ou 2, **caractérisée** en ce que la conduite de liquide (12) est configurée, au moins dans sa partie de conduite côté flux entrant, comme conduite tubulaire qui, afin de permettre le positionnement de sa ou ses ouvertures d'entrée (19), présente au moins un segment de tube (13, 14, 15) qui est maintenu à pivotement approximativement en direction verticale et de préférence également en direction horizontale.

4. Installation de nettoyage selon l'une des revendications 1 à 3, **caractérisée** en ce que la conduite tubulaire peut être pivotée dans une position de pivotement dans laquelle la ou les ouvertures d'entrée sont disposées au-dessus du niveau de liquide prévu dans le récipient de réaction.

5. Installation de nettoyage selon l'une des revendications 1 à 4, **caractérisée** en ce que le récipient de réaction (3) et le cas échéant aussi le récipient de filtration (4) ou similaire sont disposés au-dessus du récipient collecteur (2), et en ce que la ou les ouvertures de sortie (17) de la conduite de liquide (12) dans le récipient de réaction (3) sont disposées de préférence approximativement à hauteur du fond (16) de ce récipient.

6. Installation de nettoyage selon l'une des revendications 1 à 5, **caractérisée** en ce que l'unité de filtration est réalisée sous forme de crépine, qui laisse passer les liquides au moins sur son fond tourné vers le récipient collecteur (2) et dans laquelle peut être, de préférence, inséré un sac filtrant ou élément filtrant remplaçable similaire.

7. Installation de nettoyage selon l'une des revendications 1 à 6, **caractérisée** en ce que l'installation de nettoyage (1) possède dans la région du récipient de réaction (3) une conduite de liquide de rinçage pour le nettoyage de pinceaux, rouleaux, éléments d'appareils ou autres pièces, conduite qui présente une pomme d'arrosage (21) ou tête de nettoyage similaire dans sa partie terminale côté flux sortant, partie qui est de préférence maniable et/ou flexible.

8. Installation de nettoyage selon l'une des revendications 1 à 7, **caractérisée** en ce que la partie de conduite côté flux entrant (20) de la conduite de liquide de rinçage est disposée dans le récipient collecteur (2) afin d'aspirer le liquide contenu dans le récipient collecteur (2), et en ce qu'une pompe de liquide (23), qui peut notamment être commandée au moyen d'un interrupteur à pédale, est de préférence intercalée dans la conduite de liquide de rinçage.

9. Installation de nettoyage selon l'une des revendications 1 à 8, **caractérisée** en ce que la pompe de liquide (23) est réalisée sous forme de pompe plongeante ou de pompe de surpression.

10. Installation de nettoyage selon l'une des revendications 1 à 9, **caractérisée** en ce que le récipient de réaction (3) présente de préférence, au-dessus de son niveau de liquide, un plateau perforé, plateau à grille ou tablette de nettoyage similaire (9).

11. Installation de nettoyage selon l'une des revendications 1 à 10, **caractérisée** en ce que le récipient de réaction (3), le récipient collecteur (2) et/ou le récipient de filtration (4) ou similaire sont réalisés pour l'essentiel en matière plastique, de préférence en polypropylène, ou en métal, notamment en acier spécial.

12. Installation de nettoyage selon l'une des revendications 1 à 11, **caractérisée** en ce qu'une conduite d'alimentation en eau fraîche est associée au récipient collecteur (2), conduite dans laquelle est intercalé un organe d'isolement ou de régulation pouvant être actionné en fonction du niveau de liquide du récipient collecteur (2).

13. Installation de nettoyage selon l'une des revendications 1 à 12, **caractérisée** en ce qu'un dispositif agitateur, notamment électrique ou pneumatique, est associé au récipient de réaction (3), dispositif qui peut de préférence être commandé au moyen d'une minuterie.
